# FASCICULE DE BREVET EUROPEEN

(11) **EP 3 204 867 B1**
(45) Date de publication et mention de la délivrance du brevet: **18.07.2018**
(21) Numéro de dépôt: 15778272.3
(22) Date de dépôt: 07.10.2015
(51) Int. Cl.: G06F 13/28, G06F 13/40, G06F 11/07

(54) **SYSTÈME EMBARQUÉ SUR PUCE À HAUTE SÛRETÉ DE FONCTIONNEMENT**
SYSTEM AUF EINEM CHIP MIT HOHER BETRIEBSGEWISSHEIT
SYSTEM ON A CHIP HAVING HIGH OPERATING CERTAINTY

(30) Priorité: 07.10.2014 FR 1459607
(43) Date de publication de la demande: 16.08.2017
(73) Titulaire: Safran Electronics & Defense, 92100 Boulogne-Billancourt (FR)
(72) Inventeur: LIU, Céline, F-92100 Boulogne-Billancourt (FR); CHARRIER, Nicolas, F-92100 Boulogne-Billancourt (FR); MARTI, Nicolas, F-92100 Boulogne-Billancourt (FR)
(74) Mandataire: Regimbeau
(86) Numéro de dépôt international: PCT/EP2015/073183
(87) Numéro de publication internationale: WO 2016/055541

(56) Documents cités:
- WO-A1-2014/135595
- US-A1- 2012 124 411

## Description

### DOMAINE TECHNIQUE GENERAL

L'invention se rapporte au domaine des systèmes sur puce (« System on Chip - SOC »).

L'invention concerne plus particulièrement l'architecture d'un système embarqué sur puce à haute sûreté de fonctionnement.

### ETAT DE LA TECHNIQUE

La présence de systèmes de commande et d'affichage numérique dans les aéronefs modernes nécessite l'utilisation embarquée de moyens de calcul. De tels moyens peuvent se présenter sous la forme de système embarqué sur puce (« System on Chip - SOC »). Un tel système peut comprendre un ou plusieurs modules maîtres de traitement tels des processeurs, et des modules esclaves tels des périphériques d'interface mémoire ou de communication.

L'utilisation de tels systèmes sur puce pour des applications critiques comme le pilotage et la surveillance d'un aéronef dans le domaine de l'aéronautique nécessite que ces systèmes présentent une sureté de fonctionnement maximale, toute panne ou anomalie de fonctionnement pouvant avoir des conséquences catastrophiques sur la vie des occupants de l'aéronef. Il est notamment nécessaire de pouvoir prouver le déterminisme du fonctionnement du composant, sa résistance aux pannes et son pire temps d'exécution («Worst Case Execution Time»).

Or les systèmes sur puce existants ne permettent pas d'assurer une sureté de fonctionnement suffisante pour de telles applications critiques. En effet, les différents modules de traitement d'un système sur puce existant partagent généralement une partie de la mémoire cache et les modules esclaves du système ce qui les rend sujet aux pannes. De plus les systèmes existants ne permettent généralement pas de désactiver leurs modules non utilisés, embarquent un microcode difficilement certifiable et manquent de documentation ce qui rend difficile la preuve du déterminisme de leur fonctionnement.

Il existe donc un besoin d'un système sur puce présentant une architecture permettant de prouver sa résistance aux pannes de fonctionnement interne et le déterminisme de son fonctionnement.

WO2014/135595 divulgue un système embarqué sur une puce comprenant des modules maîtres et des modules esclaves.

### PRESENTATION DE L'INVENTION

La présente invention se rapporte ainsi selon un premier aspect à un système embarqué sur une puce (SoC) comprenant un ensemble de modules maîtres et de modules esclaves,
lesdits modules maîtres étant parmi :
- un module de traitement principal ayant des droits d'accès prioritaires sur l'ensemble des composants du système embarqué sur puce et un contrôleur d'accès direct à la mémoire (DMA) associé audit module de traitement principal ;
- au moins un module de traitement secondaire et un contrôleur d'accès direct à la mémoire (DMA) associé à chaque module de traitement secondaire ;
   chaque module maître étant configuré pour être connecté à une source d'horloge, une alimentation, et des modules esclaves parmi :
- un ensemble de périphériques connectés au module maître par un lien de communication dédié, dits « périphériques de proximité »,
- au moins une mémoire interne,
- un ensemble de périphériques et de mémoires externes partagés par les modules maîtres,
caractérisé en ce que
ladite source d'horloge, l'alimentation, les périphériques de proximité et une mémoire cache d'un module de traitement maître et de son contrôleur d'accès direct à la mémoire (DMA) sont dédiés audit module de traitement maître et non partagés avec les autres modules de traitement de l'ensemble de modules maîtres,
ladite au moins une mémoire interne de chaque module de traitement maître et de son contrôleur d'accès direct à la mémoire (DMA) est dédiée audit module de traitement maître, ledit module de traitement principal pouvant toutefois y accéder.

Une telle architecture permet de ségréger chaque module de traitement accompagné de son contrôleur d'accès direct à la mémoire, de ses périphériques de proximité et de sa mémoire interne du reste du système sur puce. Une telle ségrégation permet de renforcer le déterminisme de fonctionnement du système ainsi que sa résistance aux pannes.

Selon une caractéristique avantageuse et non limitative, le module de traitement principal peut être relié par au moins un bus de communication aux mémoires internes des modules de traitement secondaires.

Le module de traitement principal peut ainsi accéder au contenu de toutes les mémoires internes tout en préservant l'intégrité de la mémoire interne de ce module de traitement principal qui n'est au contraire pas accessible aux autres modules de traitement.

Par ailleurs, le système selon le premier aspect peut comprendre au moins deux étages d'interconnexions :
- un premier étage connectant chaque module maître à sa mémoire interne,
- un deuxième étage connectant les modules maîtres à des modules esclaves de l'ensemble de périphériques et de mémoires externes partagés,
lesdits modules esclaves étant distribués, selon leurs fonctions, leurs priorités et/ou leurs besoins en bande passante, sur plusieurs interconnects sans communication directe les uns avec les autres,
un interconnect étant constitué de plusieurs ports maîtres reliés à plusieurs ports esclaves au travers d'un ou plusieurs étages de commutateurs (« switchs »),

Ceci permet de diminuer le nombre de modules maitres et esclaves connectés à un même interconnect et donc de diminuer la complexité de l'arbitrage et d'améliorer le déterminisme et la sureté du fonctionnement du système sur puce. La sureté de fonctionnement du système est également renforcée par l'impossibilité de communication directe entre deux modules esclaves connectés à deux interconnects différents sans passer par un module maitre.

De plus, ledit deuxième étage d'interconnexion et l'ensemble de périphériques et de mémoires externes partagés peuvent être connectés à une source d'horloge et une alimentation distinctes de celles desdits modules maitres.

Ceci renforce la résistance aux pannes du système sur puce.

De plus, ledit système peut comprendre un maitre externe apte à être connecté aux périphériques partagés par les interconnects du deuxième étage d'interconnexion.

Ceci permet au système sur puce de donner accès à ses modules esclaves à un composant extérieur.

Par ailleurs, les périphériques de proximité et la mémoire interne d'un module maitre peuvent être connectés à l'alimentation et à la source d'horloge de ce module maitre.

L'interface de communication des périphériques de proximité d'un module maitre avec ce module maître peut être, en alternative, connectée à la source d'horloge de ce module maître.

Selon une autre alternative, les périphériques de proximité et la mémoire interne d'un module maitre peuvent être connectées à une alimentation et une source d'horloge dédiées.

Ceci renforce la résistance aux pannes du système sur puce en empêchant qu'une panne d'horloge ou d'alimentation puisse affecter les périphériques de proximité ou les mémoires internes de plusieurs modules de traitement.

A titre d'exemple, les périphériques de proximité d'un module maître peuvent être parmi un contrôleur de réinitialisation (« reset »), un chien de garde (« watchdog »), un contrôleur d'interruption, un contrôleur de temps réel, des périphériques spécifiques aux applications aéronautiques, un contrôleur d'accès direct à la mémoire (DMA).

Les périphériques de proximité d'un module de traitement secondaire peuvent être parmi un contrôleur de temps réel, un chien de garde (« watchdog »), un contrôleur d'accès direct à la mémoire (DMA), un contrôleur d'interruption.

Ceci permet à chaque module de traitement d'accéder directement à ces périphériques toujours avec le même temps d'accès, sans la latence supplémentaire qui pourrait être due à un accès concurrent d'un autre module maitre.

Par ailleurs, les interconnects peuvent être parmi :
- un interconnect de mémoires externes regroupant un ensemble de modules esclaves contrôleurs de mémoires externes et/ou de liens séries tels que des liens SPI (« Serial Peripheral Interface ») pour l'interface avec les mémoires externes ;
- un interconnect de communication regroupant un ensemble de modules esclaves comprenant des périphériques de communication, par exemple parmi : Ethernet, ARINC, UART (« Universal Asynchronous Receiver Transmitter »), SPI (« Serial Peripheral Interface »), AFDX («Avionics Full DupleX switched ethernet »), A429 (ARINC 429), A825 (ARINC 825), CAN (Controller Area Network), I2C.
- un interconnect de contrôle regroupant un ensemble de modules esclaves comprenant des périphériques de contrôle pour des applications spécifiques à l'aéronautique, par exemple des modules de contrôle configurés pour mettre en oeuvre des fonctions propres au contrôle moteur ou au calcul de freinage ;
- un interconnect de personnalisation connecté à une zone programmable pour l'ajout de fonctions personnalisées ;

Ceci permet de limiter le nombre de modules esclaves connectés à chaque interconnect et de regrouper sur un même interconnect les modules esclaves selon leur fonction afin de diminuer la complexité de la structure interne de ces interconnects.

Chaque interconnect peut comprendre des mécanismes de surveillance et de détection de pannes.

Ceci permet de surveiller les échanges entre modules au niveau des interconnect afin d'éviter la transmission de commandes ou d'informations erronées ainsi que le blocage d'un interconnect du fait d'un dysfonctionnement d'un des modules.

A titre d'exemple les différents étages de commutateurs internes à chaque interconnect peuvent être regroupés de la manière suivante :
- les modules maîtres sont regroupés en groupes de modules maitres au niveau d'un premier étage de premiers commutateurs selon les modules esclaves auxquels ils doivent pouvoir se connecter, leur fonction, leur priorité et/ou leur besoin en bande passante, chaque groupe de modules maîtres étant connecté à un commutateur,
- les sorties de ces premiers commutateurs sont connectés à un deuxième étage de commutateurs regroupant des modules esclaves en groupes de modules esclaves en fonction des modules maîtres qui y sont connectés, de leur fonction et/ou de leur besoin en bande passante, un seul lien de communication connectant un groupe de modules maîtres et un groupe de modules esclaves.

De plus, lesdits modules esclaves peuvent être regroupés en groupes de modules esclaves parmi les groupes suivants :
- modules esclaves dédiés au module de traitement principal utilisant un bus de communication rapide,
- modules esclaves dédiés au module de traitement principal utilisant un bus de communication lent,
- modules esclaves partagés entre les différents groupes de modules maîtres utilisant un bus de communication rapide,
- modules esclaves partagés entre les différents groupes de modules maîtres utilisant un bus de communication lent.

Ceci permet de diminuer le nombre et la complexité des chemins physiques internes de l'interconnect et de diminuer le nombre d'étages de commutateurs et le nombre de commutateurs pour que la latence de l'interconnect soit plus faible et l'arbitrage moins complexe.

Les modules de traitement peuvent être disposés dans le système embarqué sur puce de manière à être ségrégés physiquement.

Ceci permet de réduire la probabilité de panne commune en cas d'altération de type SEU (« Single Event Upset ») ou MBU (« Multiple Bit Upset »).

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre schématiquement l'architecture d'un système sur puce selon un mode de réalisation de l'invention ;
- la figure 2 représente un exemple détaillé d'un système sur puce selon un mode de réalisation de l'invention ;
- la figure 3 illustre l'architecture d'un interconnect dans un système sur puce selon un mode de réalisation de l'invention ;
- la figure 4 représente un exemple d'architecture d'interconnect selon l'état de la technique ;
- la figure 5 représente un exemple d'architecture d'interconnect selon un mode de réalisation de l'invention.

### DESCRIPTION DETAILLEE

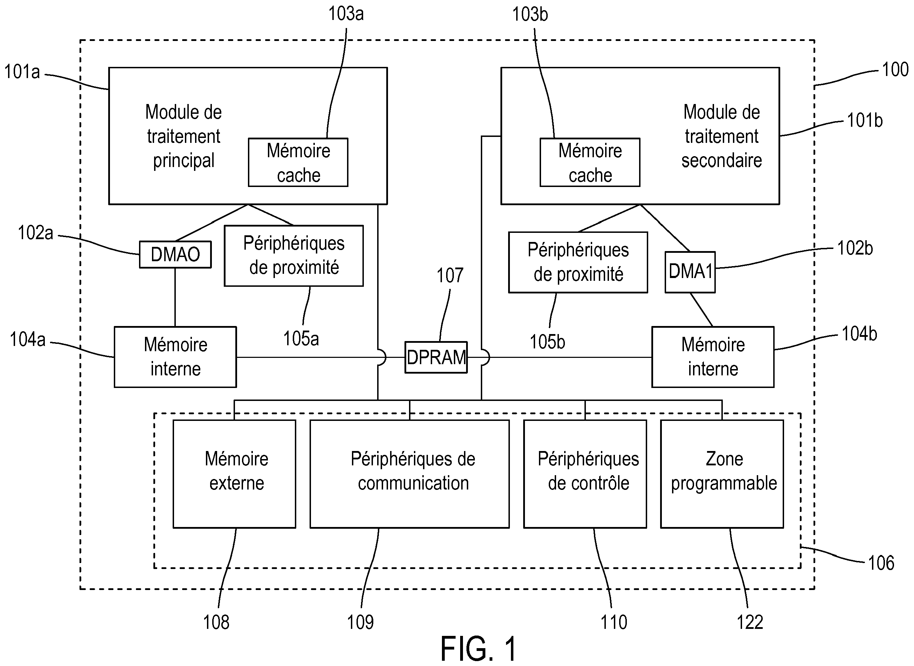

En référence à la **figure 1**, une mode de réalisation de l'invention concerne un système embarqué sur puce 100 (SoC).

Un tel système comprend un ensemble de modules maîtres et de modules esclaves. Le système 100 comprend parmi ces modules maitres des modules de traitement tels des processeurs ou des coeurs d'un processeur multi-coeurs, de tels processeurs pouvant appartenir à diverses familles de processeurs.

Le système 100 comprend notamment parmi ces modules maîtres un module de traitement principal 101a et un ou plusieurs modules de traitement secondaires 101b. Le module de traitement principal a accès à toutes les ressources activées dans le système et contrôle son bon fonctionnement. Les modules de traitement secondaires peuvent être utilisés en tant que coprocesseurs pour fournir une puissance de calcul supplémentaire, des fonctionnalités spécifiques ou permettre une maintenance. Le système sur puce 100 peut comprendre également comme module maitre un contrôleur d'accès direct à la mémoire (DMA0, DMA1) 102a, 102b associé à chaque module de traitement et permettant d'alléger les modules de traitement pour la prise en charge des transferts de données. Un système équivalent pourrait être envisagé sans DMA, les modules de traitement prenant alors en charge les transferts de données avec la mémoire.

Chaque module de traitement 101a, 101b comprend une mémoire cache 103a, 103b. La mémoire cache de chaque module de traitement lui est propre et n'est pas partagée avec les autres modules de traitement afin d'assurer une ségrégation complète des modules de traitement et de diminuer le risque de défaillance de mode commun.

De même, chaque module de traitement est connecté à une source d'alimentation et une source d'horloge qui lui sont propres. Ceci assure l'indépendance des modules de traitement les uns par rapport aux autres et réduit la probabilité de panne commune en cas de panne de l'alimentation ou de la source d'horloge de l'un des modules de traitement.

Les modules de traitement peuvent également être ségrégés physiquement en étant disposés sur le système embarqué en des localisations distinctes et éloignées les unes des autres, par exemple en les disposant chacun à un coin du composant. Ceci permet de réduire la probabilité de panne commune en cas d'altération de type SEU (« Single Event Upset ») ou MBU (« Multiple Bit Upset »).

Afin de diminuer les conflits entre les différents modules de traitement, le module de traitement principal 101a est le seul module maitre possédant des droits d'accès à l'ensemble des composants du système sur puce 100. De plus, le module de traitement principal est prioritaire sur tous les autres modules maitres dans tous ces accès aux modules esclaves du système sur puce 100. Le déterminisme du fonctionnement du système sur puce 100 est ainsi renforcé.

De plus, le module de traitement principal 101a contrôle l'activation et la désactivation de l'ensemble des autres modules du système sur puce 100, y compris les modules de traitement secondaire. Le module de traitement principal peut réinitialiser un module de traitement secondaire. Le module de traitement principal 101a est également en charge de l'analyse de l'état de santé du système sur puce 100 et de prise de sanctions lors d'une détection de panne. Le module de traitement 101 peut ainsi désactiver les modules qui seraient inutilisés ou qui présenteraient un comportement erroné en cas de panne.

Avantageusement, le module de traitement principal 101a est toujours actif. Il est notamment utilisé pour toutes les applications ne nécessitant l'utilisation que d'un seul module de traitement.

Par ailleurs, le système 100 peut prévoir une connexion pour un maitre externe 111 de façon à donner accès à celui-ci aux modules esclaves du système sur puce 100. Un tel maitre externe peut consister en un coeur, un processeur ou un microcontrôleur, ou bien en un autre périphérique.

Chaque module maitre peut être connecté à des modules esclaves parmi :
- au moins une mémoire interne 104a, 104b,
- un ensemble de périphériques connectés au module maître par un lien de communication dédié, dits « périphériques de proximité » 105a, 105b,
- un ensemble de périphériques et de mémoires externes 106 partagés par les modules maîtres.

La mémoire interne 104a, 104b d'un module de traitement et de son contrôleur d'accès direct à la mémoire DMA est dédiée à ce module de traitement et n'est pas partagée avec les autres modules de traitement.

Toutefois, le module de traitement principal 101a peut accéder à l'ensemble des mémoires internes de tous les modules de traitement secondaires 101b, par exemple pour faire de la surveillance de données ou pour utiliser la zone mémoire d'un module de traitement secondaire inactif pour étendre sa capacité interne de stockage. Pour cela, le module de traitement principal peut être relié par au moins un bus de communication directement aux mémoires internes des modules de traitement secondaires. Il est possible que le système comprenne un bus distinct pour chaque lien entre le module de traitement principal et une mémoire interne d'un module de traitement secondaire. Alternativement, un bus commun peut être employé pour relier le module de traitement principal à plusieurs modules de traitement secondaires, éventuellement additionné d'un multiplexeur pour gérer les échanges sur le bus et les priorités.

A l'inverse les modules de traitement secondaires ne sont physiquement pas reliés à la mémoire interne du module de traitement principal afin de garantir la ségrégation du module de traitement principal.

Le maitre externe n'a pas non plus accès aux mémoires internes des différents modules de traitement. Ceci permet également de garantir au module de traitement principal un temps d'accès constant à sa mémoire interne.

Une telle mémoire interne peut consister en une mémoire à accès direct RAM (« Random Access Memory ») interne et/ou en une mémoire Flash. Chaque module de traitement peut être relié à sa mémoire interne par le biais d'un bus de type AXI-M.

La mémoire interne d'un module de traitement peut être connectée à la source d'horloge et à l'alimentation de ce module de traitement de façon à diminuer la probabilité de panne de mode commun. Afin de renforcer la ségrégation, cette mémoire interne peut également être connectée à une alimentation et à une source d'horloge séparée.

En plus des moyens d'accès direct du module de traitement principal aux mémoires internes des modules de traitement secondaires, le système sur puce 100 peut comprendre une mémoire supplémentaire 107, par exemple de type DPRAM («Dual Ported Random Access Memory »), dédiée à l'échange de données entre deux modules de traitement et accessible par ces modules de traitement. Un premier module de traitement peut écrire dans cette mémoire des données qui sont ainsi mises à disposition des autres modules de traitement sans que ceux-ci aient à accéder directement à la mémoire interne du premier module de traitement. Dans le cas d'une pluralité de modules de traitement secondaires il est possible de prévoir une telle mémoire supplémentaire pour chaque module de traitement secondaire, reliée à ce module de traitement secondaire et au module de traitement principal.

Chaque module de traitement peut également être relié à des périphériques de proximité 105a, 105b. De tels périphériques sont dédiés à chaque module de traitement et ne sont accessibles que par celui-ci afin d'assurer la ségrégation des modules de traitement les uns par rapport aux autres et de diminuer la probabilité de panne de mode commun. Le maitre externe n'a pas non plus accès à ces périphériques de proximité. Ceci permet de ne pas avoir d'arbitrage à effectuer entre les différents modules de traitement et donc de renforcer le déterminisme du fonctionnement du système 100.

Chaque module de traitement peut ainsi être relié aux périphériques de proximité standards des processeurs existants, tels que les périphériques de proximité suivants :
- un chien de garde (« watchdog », « WD ») pour s'assurer de la bonne exécution d'une application par le module de traitement,
- un contrôleur de temps réel (« RTC ») pour cadencer l'exécution d'une application,
- un contrôleur d'accès direct à la mémoire (DMA) pour gérer le fonctionnement du module DMA du module de traitement,
- un contrôleur d'interruption (« IRQ »),
- un contrôleur de réinitialisation (« reset Controller »),
- des périphériques spécifiques aux applications aéronautiques.

Contrairement au module de traitement principal, les modules de traitement secondaires ne sont pas reliés à de tels périphériques de surveillance et de configuration puisqu'ils n'ont besoin que des périphériques permettant d'assurer leur propre bon fonctionnement.

Comme la mémoire interne, les périphériques de proximité d'un module de traitement peuvent être connectés à la source d'horloge et à l'alimentation de ce module de traitement de façon à diminuer la probabilité de panne de mode commun. Alternativement, afin de renforcer encore la résistante aux pannes, seule l'interface de communication des périphériques de proximité 105a, 105b d'un module de traitement avec ce module de traitement est connectée à la source d'horloge de ce module de traitement et les modules de traitement sont connectés à une alimentation séparée. Afin de renforcer la ségrégation, les périphériques de proximité peuvent également être connectés à une alimentation et une source d'horloge dédiées.

Chaque module de traitement peut être relié à ses périphériques de proximité par le biais d'un bus de type AHB-PP (« Advanced High-performance Bus »).

Chaque module de traitement dispose donc de ses propres mémoire cache, mémoire interne et périphériques de proximité, non partagés avec les autres modules de traitement du système sur puce 100, alimentés par ses propres alimentation et source d'horloge.

De plus, le module de traitement principal est le seul à avoir accès à l'ensemble des modules du système sur puce, de manière prioritaire, et à disposer des périphériques de surveillance et de configuration du système sur puce.

Une telle architecture maximise ainsi la ségrégation des différents modules de traitement, minimise la probabilité de panne de mode commun et renforce le déterminisme du fonctionnement du système sur puce.

Chaque module maitre peut également être connecté à un ensemble de périphériques et de mémoires externes 106 partagés par les modules maîtres comme représenté en **figure 1****.**

Comme indiqué ci-dessus le module de traitement principal a systématiquement la priorité sur les autres modules de traitement pour ses accès aux périphériques et mémoires externes 106 partagés.

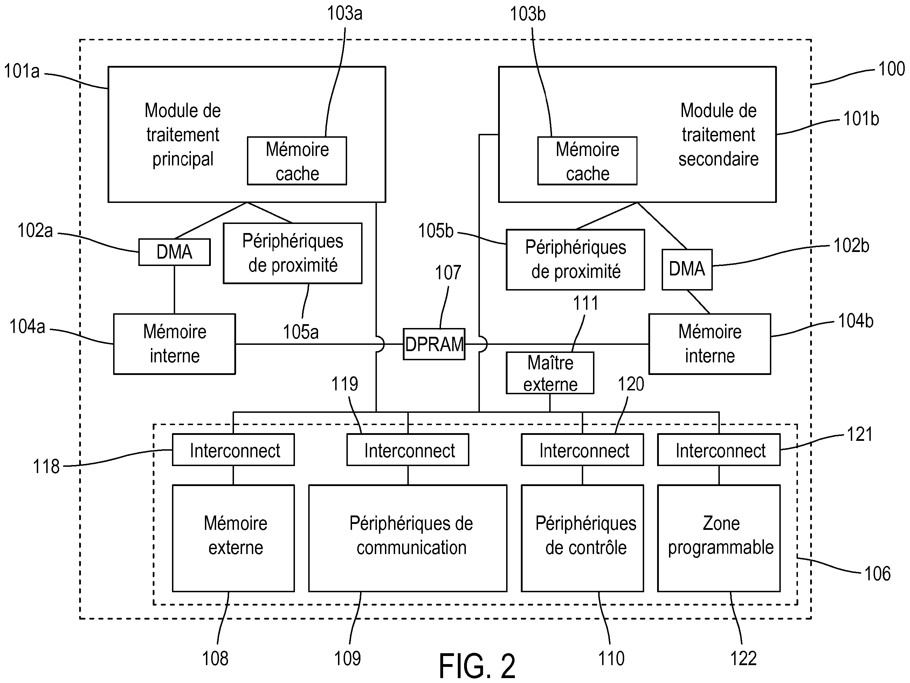

Le détail des types de périphériques et de mémoires externes partagés auxquels peuvent être connectés les modules maitres est décrit dans les paragraphes ci-dessous et illustré en Figures 1 et 2.

Chaque module maitre peut notamment être connecté à des contrôleurs de mémoires externes 108 tels que des contrôleurs de mémoire SDRam (« Synchronous Dynamic Random Access Memory ») / DDR (« Double Data Rate ») ou flash, de mémoire ou des contrôleurs QSPI («Quad Serial Peripheral Interface »)

Le maitre externe peut ne pas avoir accès aux contrôleurs de mémoire externe 108.

Chaque module maitre peut également être connecté à des périphériques de communication 109 tels que des contrôleurs AFDX (« Avionics Full Duplex »), µAFDX, A429, Ethernet, UART, SPI, I2C, A285 /CAN.

Chaque module maitre peut également avoir accès à des périphériques de contrôle 110 pour des applications spécifiques à l'aéronautique. De tels périphériques peuvent notamment être configurés pour mettre en oeuvre des fonctions propres au contrôle moteur ou au calcul du freinage tel qu'une fonction d'acquisition de capteurs (ACQ), une fonction de pilotage (ACT), une fonction de protection (PROTECT) ou une fonction de liens inter-calculateurs (LINK)

Enfin chaque module maitre peut être connecté à une zone programmable 122 constitué de circuits FPGA (« Field Programmable Gate Arrays ») permettant l'ajout au système sur puce de fonctions personnalisées.

L'ensemble des périphériques et de mémoires externes partagées 106 peut être connecté à une source d'horloge et une alimentation distinctes de celles auxquelles sont connectés les modules de traitement. L'interface de communication des périphériques de proximité 105a, 105b d'un module maitre avec ce module maître peut aussi être connectée à la source d'horloge de ce module maître La probabilité de panne de mode commun affectant une portion importante du système sur puce suite à une panne d'horloge ou d'alimentation est ainsi réduite.

Les modules maitres sont reliés aux modules esclaves par le biais de réseaux d'interconnexion notés interconnects.

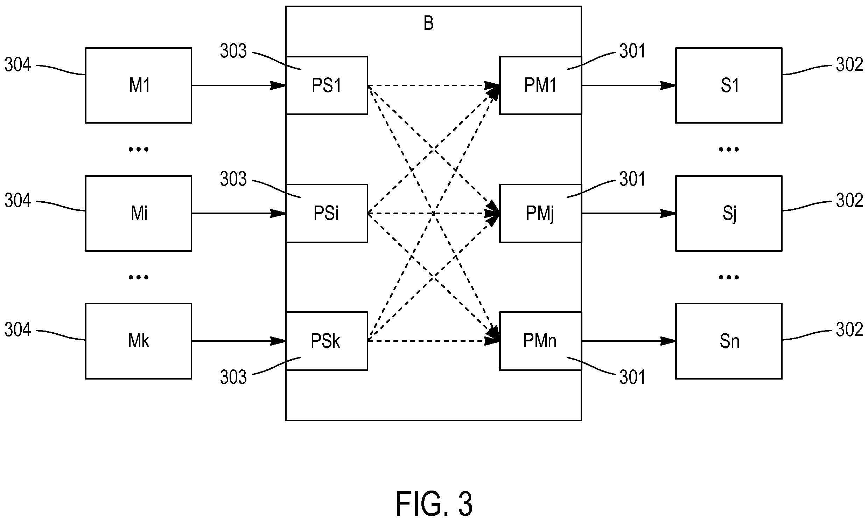

Comme représenté en **figure 3**, un interconnect est constitué de ports maitres 301 sur chacun desquels est connecté un module esclave 302, reliés au travers d'un ou plusieurs étages de commutateurs (« switchs ») à des ports esclaves 303 sur chacun desquels est connecté un module maitre 304.

Un premier étage d'interconnexion peut être utilisé pour connecter les modules maitres à la mémoire interne, et éventuellement à la mémoire externe si elle n'est pas partagée. Comme représenté en **figure 2**, un deuxième étage d'interconnexion peut être utilisé pour connecter les modules maitres aux modules esclaves de l'ensemble de périphériques. Chaque étage d'interconnexion peut comporter un ou plusieurs interconnects.

Dans une telle architecture, dans laquelle les périphériques et mémoires partagés ne sont pas connectés à la même source d'horloge que celle des modules maitres, le premier étage d'interconnexion sert également à resynchroniser les signaux des modules maitres sur un domaine d'horloge identique à celui des périphériques partagés 106.

Le premier étage d'interconnexion peut alors comporter deux interconnects pour chaque module de traitement : un interconnect pour la connexion des maitres à la mémoire interne et à la mémoire externe via les contrôleurs de mémoire externe, et un interconnect intermédiaire entre le module de traitement et le deuxième étage pour la connexion des périphériques partagés. Ces deux interconnects peuvent être connectés aux mêmes sources d'horloge et alimentation que celles du module de traitement dont ils dépendent.

Au niveau du deuxième étage d'interconnexion, les modules esclaves sont distribués sur plusieurs interconnects selon leurs fonctions, leurs priorités et/ou leurs besoins en bande passante. Ceci permet de diminuer le nombre de modules esclaves connectés à un même interconnect et donc de diminuer la complexité de l'arbitrage et d'améliorer le déterminisme et la sureté du fonctionnement du système sur puce.

Un interconnect peut être utilisé pour chaque catégorie de modules parmi l'ensemble de périphériques et de mémoires partagés décrits ci-dessus, à savoir :
- un interconnect de mémoires externes 118 regroupant un ensemble de modules esclaves contrôleurs de mémoires externes et/ou de liens séries tels que SPI pour l'interface avec les mémoires externes ;
- un interconnect de communication 119 regroupant un ensemble de modules esclaves comprenant des périphériques de communication,
- un interconnect de contrôle 120 regroupant un ensemble de modules esclaves comprenant des périphériques de contrôle pour des applications spécifiques à l'aéronautique;
- un interconnect de personnalisation 121 connecté à une zone programmable pour l'ajout de fonctions personnalisées.

Aucune communication directe n'est possible entre deux interconnects du deuxième étage d'interconnexion. Une transmission de données entre deux de ces interconnects n'est donc possible que sur requête d'un module maitre.

Un interconnect supplémentaire peut également être utilisé pour connecter chaque module de traitement à ses périphériques de proximité dans le cas où la connexion employée entre un module de traitement et ses périphériques de proximité n'est pas multiports.

Chaque interconnect peut également comprendre des mécanismes dédiés à la surveillance des échanges des données sur l'interconnect et à la détection d'éventuelles pannes. De tels mécanismes peuvent par exemple être utilisés pour éviter le blocage de l'interconnect en cas d'interruption d'un échange de données en cours, pour vérifier les droits d'accès d'un module maitre à un module esclave lors d'une requête d'échange de données, ainsi que pour surveiller les transactions sur les bus AXI et AHB.

Dans les systèmes existants, les interconnects relient généralement chacun des ports maitres à chacun des ports esclaves indépendamment des autres liaisons assurées par l'interconnect. Le nombre de liaisons internes à l'interconnect et le nombre de commutateurs à utiliser augmentent alors très rapidement avec l'augmentation du nombre de modules maitres et esclaves connectés à l'interconnect.

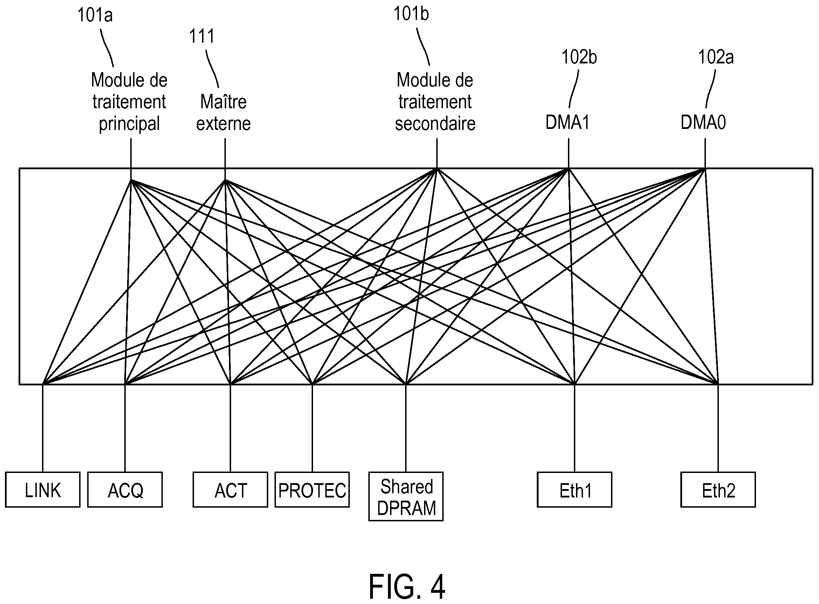

A titre d'exemple, l'application d'une telle stratégie de construction d'un interconnect à l'interconnect de contrôle décrit ci-dessus conduirait à une architecture telle que celle représentée en **figure 4****.** Une telle architecture n'est pas souhaitable dans le cadre d'un système sur puce utilisé pour des applications aéronautiques en raison de sa complexité et des problèmes d'arbitrage engendrés par cette complexité.

Le système sur puce selon l'invention propose une nouvelle stratégie de construction d'interconnect dans laquelle les modules maitres sont regroupés en groupes de modules maitres au niveau d'un premier étage de premiers commutateurs selon les modules esclaves auxquels ils doivent pouvoir se connecter, leur fonction, leur priorité et/ou leur besoin en bande passante, chaque groupe de modules maîtres étant connecté à un commutateur. Ainsi le premier étage de commutateurs de l'interconnect comporte au plus autant de commutateurs que de groupes de maitres.

Les sorties de ces premiers commutateurs sont ensuite connectés à un deuxième étage de commutateurs regroupant des modules esclaves en groupes de modules esclaves en fonction des modules maîtres qui y sont connectés, de leur fonction et/ou de leur besoin en bande passante, un seul lien de communication connectant un groupe de modules maîtres et un groupe de modules esclaves.

Les modules esclaves peuvent par exemple être regroupés en groupes de modules esclaves parmi les groupes suivants :
- modules esclaves dédiés au module de traitement principal utilisant un bus de communication rapide,
- modules esclaves dédiés au module de traitement principal utilisant un bus de communication lent,
- modules esclaves partagés entre les différents groupes de modules maîtres utilisant un bus de communication rapide,
- modules esclaves partagés entre les différents groupes de modules maîtres utilisant un bus de communication lent.

Ainsi le deuxième étage de commutateurs comporte au plus autant de commutateurs que de groupes de modules esclaves et l'interconnect comporte au plus autant de chemins physiques internes que le produit du nombre de groupes de modules maitres par le nombre de groupes de modules esclaves.

Une telle stratégie de génération d'un interconnect permet de diminuer le nombre et la complexité des chemins physiques internes de l'interconnect et de diminuer le nombre d'étages de commutateurs et le nombre de commutateurs pour que la latence de l'interconnect soit plus faible et l'arbitrage moins complexe et déterministe.

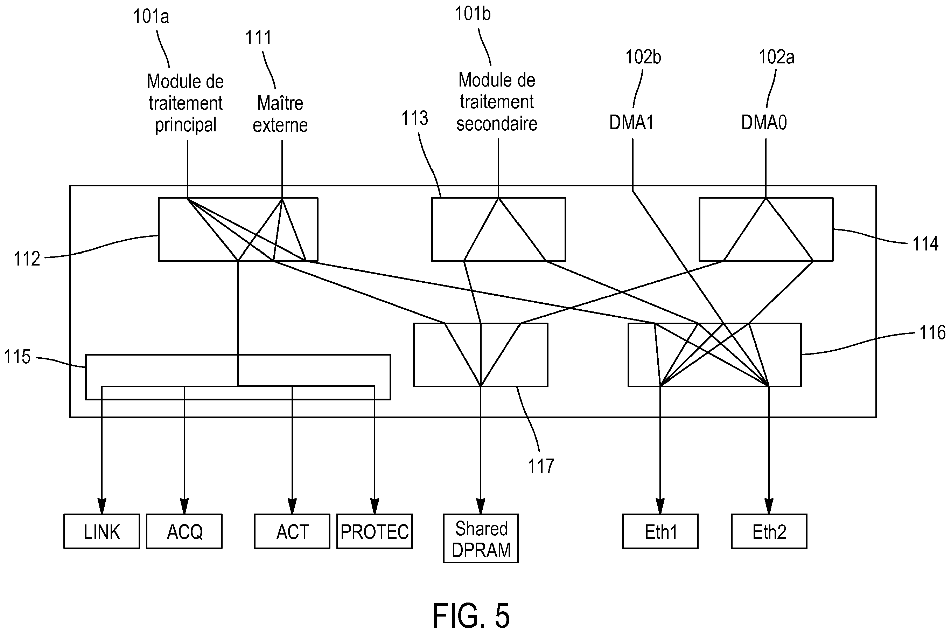

A titre d'exemple l'application d'une telle stratégie à l'interconnect de contrôle décrit ci-dessus est illustrée en **figure 5****.**

Le module de traitement principal 101a et le maitre externe 111 sont les seuls modules maitres à avoir accès à tous les modules esclaves connectés à l'interconnect de contrôle. Ces deux modules maitres sont donc regroupés dans un premier groupe de modules maitres sur un premier commutateur 112.

Le module de traitement secondaire 101b et le DMA 102a (DMA0) du module de traitement principal ont accès aux mêmes modules esclaves, à savoir la mémoire partagée 107 et les contrôleurs Ethernet. Ils peuvent donc être regroupés en un second groupe de modules maitres sur un second commutateur. Néanmoins, leurs besoins en bande passante étant très différents, le choix peut être fait de les maintenir séparés et connectés à deux commutateurs différents 113 et 114. Un commutateur différent peut donc être utilisé pour chacun de ces modules maitres.

Enfin le DMA 102b (DMA1) du module de traitement secondaire n'ayant accès qu'aux contrôleurs Ethernet, il n'est pas non plus regroupé avec les modules maitres précédemment cités.

Du côté des modules esclaves, les modules tels qu'un module de lien inter-calculateur LINK, une centrale d'acquisition ACQ, une centrale de pilotage ACT et un module de protection PROTEC n'étant accessibles que par les modules maitres du premier groupe de modules maitres défini ci-dessus et regroupant le module de traitement principal et le maitre externe, ces modules esclaves sont regroupés en un premier groupe de modules esclaves. Tous ces modules sont connectés au même commutateur 115 du deuxième étage de commutateurs de l'interconnect.

Un seul lien physique reliant le commutateur du premier groupe de modules maitres au premier groupe de modules esclaves est alors nécessaire pour relier le module de traitement principal 101a et le maitre externe 111 à tous les modules esclaves du premier groupe de modules esclaves.

De même, les deux contrôleurs Ethernet ayant des fonctions similaires sont regroupés selon leur fonction en un second groupe de modules esclaves sur un second commutateur 116 du deuxième étage de commutateurs de l'interconnect.

Enfin un commutateur supplémentaire 117 est utilisé pour connecter les différents commutateurs du premier étage de commutateurs de l'interconnect au module esclave de mémoire partagée.

Le DMA 102b du module de traitement secondaire n'étant relié qu'aux contrôleurs Ethernet, aucun commutateur supplémentaire n'est requis au premier étage de l'interconnect pour relier le DMA 102b au commutateur 116 regroupant les deux contrôleurs Ethernet.

Au total, l'interconnect de contrôle ainsi constitué ne nécessite que six commutateurs 112 à 117 et huit liens physiques internes pour interconnecter cinq modules maitres et sept modules esclaves.

Afin de renforcer le déterminisme du fonctionnement du système sur puce et de diminuer la latence en réduisant l'arbitrage, chaque interconnect peut être configuré de façon à donner systématiquement la priorité aux liens physiques connectés au commutateur du module de traitement principal ou au groupe de modules maitres comprenant le module de traitement principal.

L'invention propose donc un système sur puce présentant une grande sûreté de fonctionnement grâce au déterminisme de son fonctionnement et à sa résistance aux pannes. Un tel système peut donc être utilisé pour les applications critiques du domaine de l'aéronautique telles que le contrôle du moteur, du freinage, des actionneurs électriques d'un aéronef. Un tel système sur puce peut également être utilisé dans d'autres domaines nécessitant une importante sureté de fonctionnement tels que l'automobile, le domaine médical...

## Revendications

1. Système embarqué sur une puce (SoC) (100) comprenant un ensemble de modules maîtres et de modules esclaves,
Lesdits modules maîtres étant parmi :
- un module de traitement principal (101a) ayant des droits d'accès prioritaires sur l'ensemble des composants du système embarqué sur puce et un contrôleur d'accès direct à la mémoire (DMA) (102a) associé audit module de traitement principal (101a) ;
- au moins un module de traitement secondaire (101b) et un contrôleur d'accès direct à la mémoire (DMA) (102b) associé à chaque module de traitement secondaire (101b) ;
chaque module maître étant configuré pour être connecté à une source d'horloge, une alimentation, et des modules esclaves parmi :
- un ensemble de périphériques connectés au module maître par un lien de communication dédié, dits « périphériques de proximité » (105a, 105b),
- au moins une mémoire interne (104a, 104b),
- un ensemble (106) de périphériques et de mémoires externes partagés par les modules maîtres,
**Caractérisé en ce que**
ladite source d'horloge, l'alimentation, les périphériques de proximité (105a, 105b) et une mémoire cache (103a, 103b) d'un module de traitement maître et de son contrôleur d'accès direct à la mémoire (DMA) sont dédiés audit module de traitement maître et non partagés avec les autres modules de traitement de l'ensemble de modules maîtres,
ladite au moins une mémoire interne (104a, 104b) de chaque module de traitement maître et de son contrôleur d'accès direct à la mémoire (DMA) est dédiée audit module de traitement maître, ledit module de traitement principal pouvant toutefois y accéder (101a).

2. Système selon la revendication précédente dans lequel ledit module de traitement principal est relié par au moins un bus de communication aux mémoires internes des modules de traitement secondaires.

3. Système selon l'une des revendications précédentes comprenant au moins deux étages d'interconnexions :
- un premier étage connectant chaque module maître à sa mémoire interne (104a, 104b),
- un deuxième étage connectant les modules maîtres à des modules esclaves de l'ensemble (106) de périphériques et de mémoires externes partagés, lesdits modules esclaves étant distribués, selon leurs fonctions, leurs priorités et/ou leurs besoins en bande passante, sur plusieurs interconnects sans communication directe les uns avec les autres,
un interconnect étant constitué de plusieurs ports maîtres reliés à plusieurs ports esclaves au travers d'un ou plusieurs étages de commutateurs (« switchs »),

4. Système selon la revendication 3 dans lequel ledit deuxième étage d'interconnexion et l'ensemble de périphériques et de mémoires externes partagés sont connectés à une source d'horloge et une alimentation distinctes de celles desdits modules maitres.

5. Système selon l'une des revendications 3 ou 4 comprenant un maitre externe (111) apte à être connecté aux périphériques partagés par les interconnects du deuxième étage d'interconnexion.

6. Système selon l'une quelconque des revendications précédentes dans lequel les périphériques de proximité (105a, 105b) et la mémoire interne (104a, 104b) d'un module maitre sont connectés à l'alimentation et à la source d'horloge de ce module maitre.

7. Système selon l'une quelconque des revendications 1 à 5 dans lequel l'interface de communication des périphériques de proximité (105a, 105b) d'un module maitre avec ce module maître est connectée à la source d'horloge de ce module maître.

8. Système selon l'une quelconque des revendications 1 à 5 dans lequel les périphériques de proximité (105a, 105b) et la mémoire interne (104a, 104b) d'un module maitre sont connectés à une alimentation et une source d'horloge dédiées.

9. Système selon l'une quelconque des revendications précédentes dans lequel les périphériques de proximité (105a, 105b) d'un module maître sont parmi un contrôleur de réinitialisation (« reset »), un chien de garde (« watchdog »), un contrôleur d'interruption, un contrôleur de temps réel, des périphériques spécifiques aux applications aéronautiques, un contrôleur d'accès direct à la mémoire.

10. Système selon l'une quelconque des revendications 1 à 8, dans lequel les périphériques de proximité (105b) d'un module de traitement secondaire sont parmi un contrôleur de temps réel, un chien de garde (« watchdog »), un contrôleur d'accès direct à la mémoire (DMA), un contrôleur d'interruption.

11. Système selon l'une des revendications 3 à 10 dans lequel les interconnects sont parmi :
- un interconnect de mémoires externes (118) regroupant un ensemble de modules esclaves contrôleurs de mémoires externes et/ou de liens séries pour l'interface avec les mémoires externes (108);
- un interconnect de communication (119) regroupant un ensemble de modules esclaves comprenant des périphériques de communication (109),
- un interconnect de contrôle (120) regroupant un ensemble de modules esclaves comprenant des périphériques de contrôle (110) pour des applications spécifiques à l'aéronautique;
- un interconnect de personnalisation (121) connecté à une zone programmable (122) pour l'ajout de fonctions personnalisées ;

12. Système selon la revendication 11 dans lequel l'interconnect de communication regroupe un ensemble de périphériques de communication (109) parmi : Ethernet, ARINC, UART (« Universal Asynchronous Receiver Transmitter »), SPI (« Serial Peripheral Interface »), AFDX («Avionics Full DupleX switched ethernet »), A429 (ARINC 429), A825 (ARINC 825), CAN (Controller Area Network), I2C.

13. Système selon l'une quelconque des revendications 11 à 12 dans lequel l'interconnect de contrôle regroupe des modules de contrôle configurés pour mettre en oeuvre des fonctions propres au contrôle moteur ou au calcul de freinage.

14. Système selon l'une des revendications 3 à 13 dans lequel chaque interconnect comprend des mécanismes de surveillance et de détection de pannes.

15. Système selon l'une des revendications 3 à 14 dans lequel les différents étages de commutateurs internes à chaque interconnect sont regroupés de la manière suivante :
- les modules maîtres sont regroupés en groupes de modules maitres au niveau d'un premier étage de premiers commutateurs selon les modules esclaves auxquels ils doivent pouvoir se connecter, leur fonction, leur priorité et/ou leur besoin en bande passante, chaque groupe de modules maîtres étant connecté à un commutateur,
- les sorties de ces premiers commutateurs sont connectés à un deuxième étage de commutateurs regroupant des modules esclaves en groupes de modules esclaves en fonction des modules maîtres qui y sont connectés, de leur fonction et/ou de leur besoin en bande passante, un seul lien de communication connectant un groupe de modules maîtres et un groupe de modules esclaves.

16. Système selon la revendication 15 dans lequel lesdits modules esclaves sont regroupés en groupes de modules esclaves parmi les groupes suivants :
- modules esclaves dédiés au module de traitement principal (101a) utilisant un bus de communication rapide,
- modules esclaves dédiés au module de traitement principal (101a) utilisant un bus de communication lent,
- modules esclaves partagés entre les différents groupes de modules maîtres utilisant un bus de communication rapide,
- modules esclaves partagés entre les différents groupes de modules maîtres utilisant un bus de communication lent.

17. Système selon l'une quelconque des revendications précédentes dans lequel les modules de traitement sont disposés dans le système embarqué sur puce de manière à être ségrégés physiquement.

## Patentansprüche

1. Auf einem Chip integriertes System (SoC) (100), umfassend einen Satz an Master-Modulen und an Slave-Modulen,
wobei die Master-Module sind aus:
- einem Hauptverarbeitungsmodul (101a), welches prioritäre Zugriffsrechte über die Gesamtheit der Komponenten des auf Chip integrierten Systems und eine Steuerung zum direkten Zugriff auf den Speicher (DMA) (102a) aufweist, welche mit dem Hauptverarbeitungsmodul (101a) verknüpft ist;
- mindestens einem sekundären Verarbeitungsmodul (101b) und einer Steuerung zum direkten Zugriff auf den Speicher (DMA) (102b), welche mit jedem sekundären Verarbeitungsmodul (101b) verknüpft ist;
wobei jedes Master-Modul dafür konfiguriert ist, mit einer Taktquelle, einer Stromversorgung und Slave-Modulen verbunden zu werden aus:
- einem Satz an Peripheriegeräten, welche über einen dedizierten Kommunikationslink mit dem Master-Modul verbunden sind, "nahe Peripheriegeräte" (105a, 105b) genannt,
- mindestens einem internen Speicher (104a, 104b),
- einem Satz (106) an Peripheriegeräten und externen Speichern, welche von den Master-Modulen gemeinsam genutzt werden,
**dadurch gekennzeichnet, dass**
die Taktquelle, die Stromversorgung, die nahen Peripheriegeräte (105a, 105b) und ein Cache-Speicher (103a, 103b) eines Master-Verarbeitungsmoduls und seiner Steuerung zum direkten Zugriff auf den Speicher (DMA) für das Master-Verarbeitungsmodul dediziert sind und nicht mit den anderen Verarbeitungsmodulen aus dem Satz an Master-Modulen gemeinsam genutzt werden,
der mindestens eine interne Speicher (104a, 104b) jedes Master-Verarbeitungsmoduls und seiner Steuerung zum direkten Zugriff auf den Speicher (DMA) für das Master-Verarbeitungsmodul dediziert ist, wobei das Hauptverarbeitungsmodul nichtsdestotrotz darauf zugreifen kann (101a).

2. System nach dem vorstehenden Anspruch, wobei das Hauptverarbeitungsmodul über mindestens einen Kommunikationsbus an den internen Speichern der sekundären Verarbeitungsmodule angeschlossen ist.

3. System nach einem der vorstehenden Ansprüche, umfassend mindestens zwei Zwischenverbindungsstufen:
- eine erste Stufe, die jedes Master-Modul mit seinem internen Speicher (104a, 104b) verbindet,
- eine zweite Stufe, die die Master-Module mit Slave-Modulen aus dem Satz (106) an gemeinsam genutzten Peripheriegeräten und externen Speichern verbindet, wobei die Slave-Module ihren Funktionen, ihren Prioritäten und/oder ihren Bandbreitenbedarfen gemäß über mehrere Zwischenverbindungen ohne direkte Kommunikation miteinander verteilt sind,
wobei eine Zwischenverbindung aus mehreren Master-Ports besteht, die über eine oder mehr Schalterstufen ("Switches") hinweg an mehrere Slave-Ports angeschlossen sind.

4. System nach Anspruch 3, wobei die zweite Zwischenverbindungsstufe und der Satz an gemeinsam genutzten Peripheriegeräten und externen Speichern mit einer Taktquelle und einer Stromversorgung verbunden sind, die sich von denjenigen der Master-Module unterscheiden.

5. System nach einem der Ansprüche 3 oder 4, umfassend einen externen Master (111), der in der Lage ist, über die Zwischenverbindungen der zweiten Zwischenverbindungsstufe mit den gemeinsam genutzten Peripheriegeräten verbunden zu werden.

6. System nach einem der vorstehenden Ansprüche, wobei die nahen Peripheriegeräte (105a, 105b) und der interne Speicher (104a, 104b) eines Master-Moduls mit der Stromversorgung und mit der Taktquelle dieses Master-Moduls verbunden sind.

7. System nach einem der Ansprüche 1 bis 5, wobei die Kommunikationsschnittstelle der nahen Peripheriegeräte (105a, 105b) eines Master-Moduls zu diesem Master-Modul mit der Taktquelle dieses Master-Moduls verbunden ist.

8. System nach einem der Ansprüche 1 bis 5, wobei die nahen Peripheriegeräte (105a, 105b) und der interne Speicher (104a, 104b) eines Master-Moduls mit einer Stromversorgung und einer Taktquelle verbunden sind, welche dediziert sind.

9. System nach einem der vorstehenden Ansprüche, wobei die nahen Peripheriegeräte (105a, 105b) eines Master-Moduls sind aus einer Neuinitialisierungssteuerung ("Reset"), einem Wachhund ("Watchdog"), einer Unterbrechungssteuerung, einer Echtzeitsteuerung, für Luftfahrtanwendungen spezifischen Peripheriegeräten, einer Steuerung zum direkten Zugriff auf den Speicher.

10. System nach einem der Ansprüche 1 bis 8, wobei die nahen Peripheriegeräte (105b) eines sekundären Verarbeitungsmoduls sind aus einer Echtzeitsteuerung, einem Wachhund ("Watchdog"), einer Steuerung zum direkten Zugriff auf den Speicher (DMA), einer Unterbrechungssteuerung.

11. System nach einem der Ansprüche 3 bis 10, wobei die Zwischenverbindungen sind aus:
- einer Zwischenverbindung von externen Speichern (118), welche einen Satz an Slave-Modulen, die externe Speicher und/oder Reihen-Links für die Schnittstelle zu den externen Speichern (108) steuern, gruppiert;
- einer Kommunikations-Zwischenverbindung (119), welche einen Satz an Slave-Modulen, die Kommunikations-Peripheriegeräte (109) umfassen, gruppiert,
- einer Steuerungs-Zwischenverbindung (120), welche einen Satz an Slave-Modulen, die Steuerungs-Peripheriegeräte (110) für luftfahrtspezifische Anwendungen umfassen, gruppiert;
- einer Individualisierungs-Zwischenverbindung (121), welche mit einem programmierbaren Bereich (122) für das Hinzufügen von individualisierten Funktionen verbunden ist.

12. System nach Anspruch 11, wobei die Kommunikations-Zwischenverbindung einen Satz an Kommunikations-Peripheriegeräten (109) gruppiert aus: Ethernet, ARINC, UART ("Universal Asynchronous Receiver Transmitter"), SPI ("Serial Peripheral Interface"), AFDX ("Avionics Full DupleX switched Ethernet"), A429 (ARINC 429), A825 (ARINC 825), CAN (Controller Area Network), I2C.

13. System nach einem der Ansprüche 11 bis 12, wobei die Steuerungs-Zwischenverbindung Steuerungsmodule gruppiert, die dafür konfiguriert sind, für die Motorsteuerung oder für die Bremsberechnung eigene Funktionen zu umzusetzen.

14. System nach einem der Ansprüche 3 bis 13, wobei jede Zwischenverbindung Überwachungs- und Störungserkennungsmechanismen umfasst.

15. System nach einem der Ansprüche 3 bis 14, wobei die verschiedenen Stufen von internen Schaltern an jeder Zwischenverbindung in der folgenden Weise gruppiert sind:
- die Master-Module sind gemäß den Slave-Modulen, die denen sie sich verbinden können müssen, ihrer Funktion, ihrer Priorität und/oder ihrem Bandbreitenbedarf in Gruppen von Master-Modulen auf der Ebene einer ersten Stufe von ersten Schaltern gruppiert, wobei jede Gruppe von Master-Modulen mit einem Schalter verbunden ist,
- die Ausgänge dieser ersten Schalter sind mit einer zweiten Stufe von Schaltern verbunden, die Slave-Module in Abhängigkeit von den Master-Modulen, die damit verbunden sind, ihrer Funktion und/oder ihrem Bandbreitenbedarf in Gruppen von Slave-Modulen gruppiert, wobei ein einzelner Kommunikationslink eine Gruppe von Master-Modulen und eine Gruppe von Slave-Modulen verbindet.

16. System nach Anspruch 15, wobei die Slave-Module in Gruppen von Slave-Modulen aus den folgenden Gruppen gruppiert sind:
- Slave-Module, die für das Hauptverarbeitungsmodul (101a) dediziert sind, unter Verwendung eines schnellen Kommunikationsbusses,
- Slave-Module, die für das Hauptverarbeitungsmodul (101a) dediziert sind, unter Verwendung eines langsamen Kommunikationsbusses,
- Slave-Module, die zwischen den verschiedenen Gruppen von Master-Modulen gemeinsam genutzt werden, unter Verwendung eines schnellen Kommunikationsbusses,
- Slave-Module, die zwischen den verschiedenen Gruppen von Master-Modulen gemeinsam genutzt werden, unter Verwendung eines langsamen Kommunikationsbusses.

17. System nach einem der vorstehenden Ansprüche, wobei die Verarbeitungsmodule in dem auf Chip integrierten System so angeordnet sind, dass sie physisch getrennt sind.

## Claims

1. A system on chip (SoC) (100) comprising a set of master modules and slave modules,
said master modules being from among:
- a main processing module (101a) having priority access rights over all the components of the system on chip and a direct memory access (DMA) controller (102a) associated with said main processing module (101a);
- at least one secondary processing module (101b) and a direct memory access (DMA) controller (102b) associated with each secondary processing module (101b);
each master module being configured to be connected to a clock source, a power supply, and slave modules from among:
- a set of peripherals connected to the master module by a dedicated communication link, so-called "proximity peripherals" (105a, 105b),
- at least one internal memory (104a, 104b),
- a set (106) of peripherals and external memories shared by the master modules,
**characterised in that**
said clock source, the power supply, the proximity peripherals (105a, 105b) and a cache memory (103a, 103b) of a master processing module and its direct memory access (DMA) controller are dedicated to said master processing module and not shared with the other processing modules of the set of master modules,
said at least one internal memory (104a, 104b) of each master processing module and its direct memory access (DMA) controller is dedicated to said master processing module, said main processing module being nonetheless able to access it (101a).

2. The system according to the preceding claim, wherein said main processing module is connected by at least one communication bus to the internal memories of the secondary processing modules.

3. The system according to one of the preceding claims, comprising at least two stages of interconnections:
- a first stage connecting each master module to its internal memory (104a, 104b),
- a second stage connecting the master modules to slave modules of the set (106) of shared peripherals and external memories, said slave modules being distributed, according to the functions thereof, the priorities thereof and/or bandwidth requirements thereof, across several interconnects without direct communication with each other,
an interconnect being composed of several master ports connected to several slave ports via one or more stages of switches.

4. The system according to claim 3, wherein said second interconnect stage and the set of shared peripherals and external memories are connected to a clock source and power supply separate from those of said master modules.

5. The system according to one of claims 3 or 4, comprising an external master (111) able to be connected to the shared peripherals by the interconnects of the second interconnect stage.

6. The system according to any one of the preceding claims, wherein the proximity peripherals (105a, 105b) and the internal memory (104a, 104b) of a master module are connected to the power supply and to the clock source of this master module.

7. The system according to any one of claims 1 to 5, wherein the communication interface of the proximity peripherals (105a, 105b) of a master module with this master module is connected to the clock source of this master module.

8. The system according to any one of claims 1 to 5, wherein the proximity peripherals (105a, 105b) and the internal memory (104a, 104b) of a master module are connected to a dedicated power supply and clock source.

9. The system according to any one of the preceding claims, wherein the proximity peripherals (105a, 105b) of a master module are among a reset controller, a watchdog, an interrupt controller, a real-time controller, peripherals specific to aerospace applications, or a direct memory access controller.

10. The system according to any one of claims 1 to 8, wherein the proximity peripherals (105b) of a secondary processing module are among a real-time controller, a watchdog, a direct memory access (DMA) controller, or an interrupt controller.

11. The system according to any one of claims 3 to 10, wherein the interconnects are among:
- an external memory interconnect (118) grouping together a set of slave modules controlling external memories and/or series links for the interface with the external memories (108);
- a communication interconnect (119) grouping together a set of slave modules comprising communication peripherals (109),
- a control interconnect (120) grouping together a set of slave modules comprising control peripherals (110) for aerospace-specific applications;
- a customisation interconnect (121) connected to a programmable area (122) for the addition of customised functions.

12. The system according to claim 11, wherein the communication interconnect groups together a set of communication peripherals (109) from among: Ethernet, ARINC, UART ("Universal Asynchronous Receiver Transmitter"), SPI ("Serial Peripheral Interface"), AFDX ("Avionics Full DupleX switched Ethernet"), A429 (ARINC 429), A825 (ARINC 825), CAN (Controller Area Network), or I2C.

13. The system according to any one of claims 11 to 12, wherein the control interconnect groups together control modules configured to implement functions specific to engine control or braking computing.

14. The system according to one of claims 3 to 13, wherein each interconnect comprises monitoring and fault detection mechanisms.

15. The system according to one of claims 3 to 14, wherein the different stages of internal switches at each interconnect are grouped together in the following way:
- the master modules are grouped together into groups of master modules at a first stage of first switches according to the slave modules to which they must be able to connect, their function, their priority and/or their bandwidth requirement, each group of master modules being connected to a switch,
- the outputs of these first switches are connected to a second stage of switches grouping slave modules into groups of slave modules as a function of the master modules that are connected thereto, their function and/or bandwidth requirement, a single communication link connecting a group of master modules and a group of slave modules.

16. The system according to claim 15, wherein said slave modules are grouped together into groups of slave modules from among the following groups:
- slave modules dedicated to the main processing module (101a) using a fast communication bus,
- slave modules dedicated to the main processing module (101a) using a slow communication bus,
- slave modules shared between the different groups of master modules using a fast communication bus,
- slave modules shared between the different groups of master modules using a slow communication bus.

17. The system according to any one of the preceding claims, wherein the processing modules are arranged in the system on chip so as to be physically segregated.
